# EUROPÄISCHE PATENTSCHRIFT

(11) **EP 2 073 407 B1**
(45) Veröffentlichungstag und Bekanntmachung des Hinweises auf die Patenterteilung: **06.06.2012**
(21) Anmeldenummer: 07024425.6
(22) Anmeldetag: 17.12.2007
(51) Int. Cl.: H04B 10/22

(54) **Maschine mit Datenübermittlung von einem Maschinenteil zu einem anderen Maschinenteil, das relativ zu dem einen Maschinenteil drehbar ist**
Machine with data transmission from one machine component to another machine component which is pivotable in relation to the first machine component
Machine dotée d'une transmission de données d'un élément de machine vers un autre élément de machine tournant par rapport au premier élément de machine

(43) Veröffentlichungstag der Anmeldung: 24.06.2009
(73) Patentinhaber: SIEMENS AKTIENGESELLSCHAFT, 80333 München (DE)
(72) Erfinder: Schmidt, Richard, 91083 Baiersdorf (DE); Schwesig, Günter, 91054 Erlangen (DE); Wetzel, Ulrich, 07980 Berga (DE)

(56) Entgegenhaltungen:
- DE-A1- 3 409 809
- US-A- 4 190 318

## Beschreibung

Maschine mit Datenübermittlung von einem Maschinenteil zu einem anderen Maschinenteil, das relativ zu dem einen Maschinenteil drehbar ist.

Die US 4 190 318 offenbart eine Maschine, insbesondere einen Schleifring, mit einem Maschinenteil, welches in einem zweiten Maschinenteil gelagert ist. Dabei sind die beiden Maschinenteile zueinander um eine gemeinsame Drehachse rotierbar. Mehrere das Licht emittierende Dioden sind dabei am rotierenden Maschinenteil angebracht und emittieren Licht zur Datenübertragung durch verschiedene optische Kanäle zu Fotodetektoren, welche am stationären Maschinenteil angeordnet sind. Das Licht wird dabei in radialer Richtung bezogen auf die Drehachse der Maschine emittiert und bildet einen kontinuierlichen Ring, welcher der Datenübertragung dient.

Die DE 34 09 809 A1 offenbart eine Sende- und/oder Empfangseinrichtung für elektromagnetische Strahlung, bei der zwischen einem drehbaren und einem feststehenden Bereich einer Sende- und/oder Empfangseinrichtung optische Signale genutzt werden, um Daten zu übertragen. Dabei ist eine Lichtwellenleiterverzweigung offenbart, mit deren Hilfe optische Signale von einem oder mehreren optoelektrischen Wandler(n) in einen Lichtwellenleiter hinein bzw. aus diesem heraus übertragen werden können.

Es geht vorliegend um die Problematik, dass bei Maschinen mit einem ersten Maschinenteil und einem zweiten Maschinenteil, das relativ zu dem ersten Maschinenteil um eine Drehachse drehbar ist, Daten von dem einen Maschinenteil zu dem anderen Maschinenteil übermittelt werden müssen, gegebenenfalls auch wieder zurück von dem anderen Maschinenteil zu dem einen Maschinenteil. Die Erfordernisse ergeben sich insbesondere bei modernen Maschinen, bei denen Feldbussignale übermittelt werden müssen. Vorliegend soll die Datenübermittlung über Lichtsignale erfolgen, so dass an dem einen Maschinenteil zumindest eine Lichtquelle bereitgestellt ist und an dem anderen Maschinenteil zumindest ein Lichtempfänger bereitgestellt ist.

Einfach lässt sich die optische Kommunikation bewerkstelligen, wenn Lichtquelle und Lichtempfänger auf der Drehachse angeordnet werden können, denn dann kann genau eine Lichtquelle Licht zu genau einem Lichtempfänger senden. Häufig erfolgt die Drehung des drehbaren Maschinenteils jedoch über eine Hohlwelle. Es ergibt sich dann die Problematik, dass zu einem Lichtempfänger bei beliebigen Winkelstellungen Licht gelangen muss. Dies bedeutet, dass über einen vollständigen Ring, welcher die Hohlwelle umgibt, Licht abgestrahlt werden muss. Bisher behilft man sich damit, eine Mehrzahl von Lichtquellen bereitzustellen und dann das Licht in axialer Richtung derart zu führen, dass es sich zu einem leuchtenden Ring aufweitet. Bei dieser Ausführungsform geht jedoch in axialer Richtung in der Maschine relativ viel Platz für die Anordnung zum Aufweiten der Lichtstrahlen verloren.

Es ist Aufgabe der Erfindung, eine Maschine der eingangs genannten Gattung bereitzustellen, die relativ kurz und einfach baut, und bei der Energie gespart wird.

Die Aufgabe wird durch eine Maschine nach Patentanspruch 1 gelöst.

Die Anordnung zwischen den Lichtquellen und den Lichtempfängern ist so gestaltet, dass die Lichtsignale in radialer Richtung zur Drehachse übertragen werden. So hat man auch hier das Problem, dass die Lichtstrahlen der einzelnen Lichtquellen aufgeweitet werden müssen, aber auch dieses Aufweiten erfolgt dann naturgemäß in radialer Richtung, so dass die Maschine kurz bauen kann.

Das Licht wird erfindungsgemäß von einer Mehrzahl von Lichtquellen in eine sich verzweigende Lichtwellenleiterstruktur eingekoppelt, wobei dann einzelne Lichtwellenleiterzweige am Rand des einen Maschinenteils enden. Es tritt Licht aus den Lichtwellenleiterzweigenden aus, also nicht über den gesamten Umfang eines Kreises, sondern lediglich in einzelnen Punkten des Kreises. Es ist aber gewährleistet, dass das Licht empfangsseitig ankommt, wenn zumindest zwei Empfänger bereitgestellt werden, und zwar muss lediglich die Anzahl der Enden der Lichtwellenleiterzweige ausreichend groß sein und deren Winkelabstände passend abgestimmt sein zur Anzahl und zum Winkelabstand der Empfänger. Erfindungsgemäß sind die Enden der Lichtwellenleiterzweige und die Empfänger derart aufeinander abgestimmt, dass bei jeder Winkelstellung Licht aus zumindest einem Lichtwellenleiterzweigende zu einem Empfänger gelangt. Damit ist gewährleistet, dass eben bei jeder Winkelstellung auch Lichtsignale vom Sender zum Empfänger gelangen und die Datenübermittlung nicht unterbrochen wird.

Eine solche Lichtwellenleiterstruktur kann auf einem Trägersubstrat bereitgestellt sein, ist jedoch besonders einfach herstellbar, wenn sie in eine Leiterplatte integriert ist, wobei auf der Leiterplatte dann auch elektronische Bauteile bereitgestellt werden können, die zur Erzeugung der Signale bzw. deren Auswertung dienen können.

Es muss auf jeden Fall gewährleistet sein, dass Licht von zumindest einer Lichtquelle zu zumindest einem Empfänger gelangt, damit die Datenübermittlung gewährleistet ist. Dies bedeutet, dass bei bestimmten Winkelstellungen das Licht von einer oder zwei der Lichtquellen genügt und das Licht der übrigen Lichtquellen ungenutzt verbleibt. Bei einer bevorzugten Ausführungsform der Erfindung werden die Lichtquellen von einer Steuereinheit angesteuert, die jeweils nur einen Teil der Lichtquellen gleichzeitig zur Lichtabgabe veranlasst. Dann wird nämlich Energie eingespart. Dieser Teil der Lichtquellen wird bevorzugt in Abhängigkeit von einer Winkelstellung des zweiten Maschinenteils festgelegt, und zwar derart, dass nur diejenigen Lichtquellen zur Lichtabgabe veranlasst werden, deren Licht bei besagter Winkelstellung zu einem Empfänger gelangt.

Wie eingangs bereits dargestellt, ist die Erfindung insbesondere für den Fall geeignet, dass das zweite Maschinenteil über eine Hohlwelle drehbar ist.

Das erfindungsgemäße Prinzip kann auch bei bidirektionaler Datenübertragung (Datenaustausch) verwendet werden. Dann muss lediglich an dem einen Maschinenteil, an dem die Lichtquellen angeordnet sind, zusätzlich auch zumindest ein Lichtempfänger angeordnet werden, und an dem anderen Maschinenteil, an dem ein Lichtempfänger angeordnet ist, zumindest auch eine Lichtquelle angeordnet werden.

Die konkrete Ausgestaltung unterscheidet sich bei der bidirektionalen Kommunikation nicht grundlegend von der unidirektionalen Datenübermittlung. Besonders einfach lässt sich dies so ausführen, dass auf einer Vorderseite der Maschinenteile Licht radial nach außen abgegeben wird und auf einer Rückseite Licht radial nach innen abgegeben wird.

Zur Erfindung gehört das Bereitstellen eines Verfahrens zum Übermitteln von Lichtsignalen zur Datenübermittlung von einem ersten zu einem zweiten Maschinenteil, von denen ein Maschinenteil relativ zum anderen um eine Drehachse drehbar ist, bei dem erfindungsgemäß die Lichtsignale radial zur Drehachse übermittelt werden. Bevorzugte Ausführungsform ist diejenige, dass die Lichtsignale radial nach außen übermittelt werden. Letzteres ist insbesondere dann der Fall, wenn das drehende Maschinenteil mit einer Hohlwelle gekoppelt ist und radial weiter innen liegt als ein ortsfestes, gegebenenfalls mit einem Gehäuse gekoppeltes Maschinenteil.

Nachfolgend werden bevorzugte Ausführungsformen der Erfindung und vorliegend nicht beanspruchte Ausführungsformen unter Bezug auf die Zeichnung beschrieben, wobei
- FIG 1: einen Schnitt durch eine erste Ausführungs- form, die vorliegend nicht beansprucht wird, und
- FIG 2: eine Draufsicht auf die Ausführungsform aus FIG 1 zeigen,
- FIG 3: einen Schnitt durch eine gegenüber der Aus- führungsform aus FIG 1 erweiterte Ausfüh- rungsform zeigt,
- FIG 4: ein bei einer Ausführungsform der Erfindung verwendetes Prinzip veranschaulicht und
- FIG 5 bis FIG 7: Draufsichten auf die Ausführungsform der Er- findung nach Art von FIG 2 zeigen.

Eine Maschine weist ein erstes Maschinenteil auf, das am Aufstellort der Maschine unbeweglich bleibt, sowie ein zweites Maschinenteil, das sich relativ zu dem ersten Maschinenteil dreht. Zu dem ersten Maschinenteil gehört ein Gehäuse 10, an dem eine Trägerplatte 12 befestigt ist. Zu dem zweiten Maschinenteil gehört eine Hohlwelle 14, die über Lager 16 relativ zu dem Gehäuse 10 drehbar ist und an der eine Trägerplatte 18 angeordnet ist. Die Trägerplatten 12 und 18 sind über ein Loslager 20 miteinander gekoppelt. Vorliegend sollen Daten von dem drehbaren Maschinenteil zum nicht-drehbaren Maschinenteil übersandt werden. Hierzu ist eine Mehrzahl von Lichtquellen 22 auf der Trägerplatte 18 bereitgestellt, die Licht in einen lichtdurchlässigen Ring 24 einkoppeln. Der lichtdurchlässige Ring 24 ist aus Lichtwellenleitermaterial hergestellt und kann über seinen Innenkreis eingekoppeltes Licht zu seinem Außenkreis transportieren. Die Breite des Rings 24 und die Anzahl der Lichtquellen 22 sind so gewählt, dass ein Lichtwellenstrahlenbündel 26, das von einer Lichtquelle 22 ausgeht, mit einem von der benachbarten Lichtquelle 22 ausgesandten Lichtstrahlenbündel 26 zumindest am durch den Außenkreis des Rings 24 definierten äußeren Rands überlappt. Am äußeren Rand des Rings 24 ist eine Art Linsenstruktur 28 ausgebildet, die es erleichtert, dass Licht am äußeren Rand austritt. Nun sind auf der Trägerplatte 12 vorliegend zwei Empfänger 30 angeordnet, und vor diesen Empfängern 30 ist ebenfalls Lichtwellenleitermaterial 32 angeordnet, wobei dies vorliegend auch als Ring bereitgestellt sein kann oder als Teilring (Ringsegment). An dem Lichtwellenleitermaterial ist nun ebenfalls eine linsenartige Struktur 34 angeordnet, die dazu dient, das aus der linsenartigen Struktur 28 austretende Licht wieder einzukoppeln und in das Lichtwellenleitermaterial 32 und damit zum Empfänger 30 zu leiten.

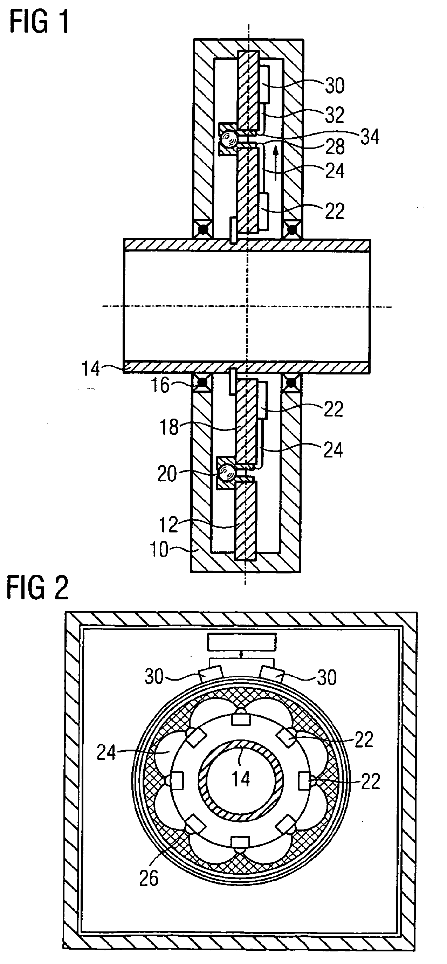

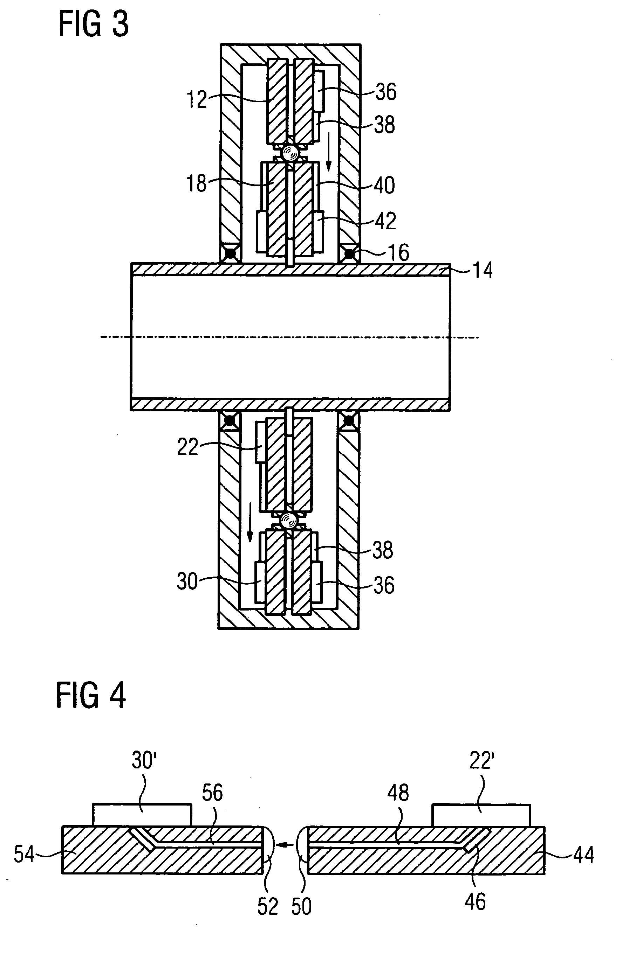

Bei der vorliegend nicht beanspruchten Ausführungsform gemäß FIG 1 und FIG 2 sitzen die Lichtquellen 22 radial innen und die Lichtempfänger 30 radial außen. Es ist jedoch möglich, eine genau umgekehrte Anordnung vorzusehen, d.h. die Empfänger nach radial innen zu setzen und die Lichtquellen nach radial außen. Bei der vorliegend nicht beanspruchten Ausführungsform gemäß FIG 3 sind beide Prinzipien gleichzeitig verwirklicht: Die in der FIG 3 linke Seite der Trägerplatten 12 und 18 entspricht genau der FIG 1. Auf der Rückseite der Trägerplatten 12 und 18 hingegen ist die genannte umgekehrte vorliegend nicht beanspruchte Ausführungsform verwirklicht, nämlich eine Mehrzahl von Sendern 36 radial außen, die Licht in einen Lichtwellenleiter 38 einkoppeln, das in einen Lichtwellenleiter 40 eingekoppelt wird und zu einem Empfänger 42 auf der Rückseite der Trägerplatte 18 gelangt. Die FIG 3 ermöglicht somit eine bidirektionale Datenkommunikation.

Bei den vorliegend nicht beanspruchten Ausführungsformen gemäß FIG 1 bis FIG 3 koppeln die Lichtquellen 22 bzw. 36 das Licht radial in Lichtwellenleiterplatten 24 bzw. 38. Es ist nun in einer erfindungsgemäßen Ausführungsform vorgesehen, anstelle einer lichtdurchlässigen Platte 24 einzelne Lichtwellenleiter zu verwenden, und zwar sind diese bevorzugt in eine Leiterplatte 44 eingebettet, so wie es in FIG 4 gezeigt ist. Eine Lichtquelle 22' gibt Licht in die Leiterplatte 44 hinein ab, wo es von einem Spiegel 46 reflektiert und in einen Lichtwellenleiter 48 eingekoppelt wird. Über eine linsenartige Struktur 50 tritt das Licht in den Spalt zwischen den beiden Maschinenteilen aus, es tritt über eine linsenartige Struktur 52 dann wieder in eine Leiterplatte 54 ein, nämlich insbesondere in einen dort befindlichen Lichtwellenleiter 56 und gelangt zum Empfänger 30'.

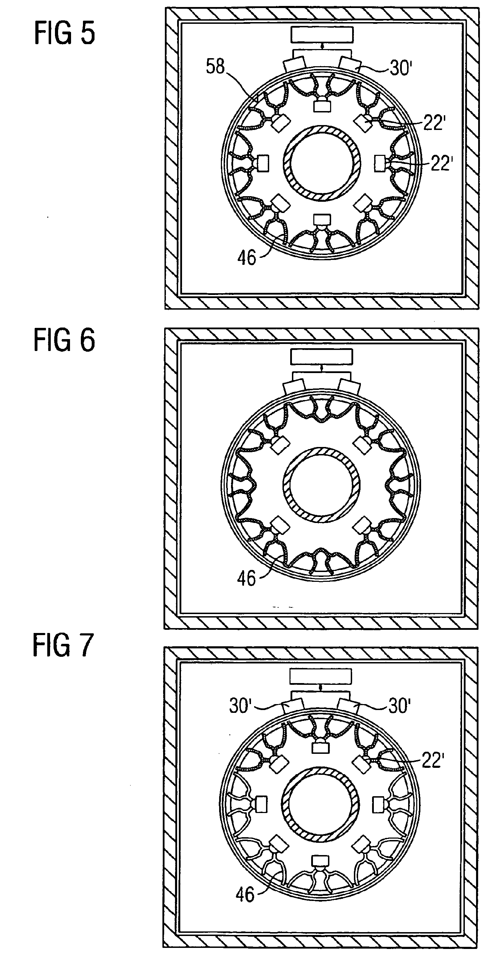

Die Lichtwellenleiter 46 bzw. 56 sind verzweigt. Dies ist für den Lichtwellenleiter 46 in FIG 5 veranschaulicht: Ausgehend von der Lichtquelle 22' läuft das Licht radial und geht dann an einer Abzweigung in zwei Lichtwellenleiterzweige, in denen es abermals abzweigt etc., bis es an Lichtwellenleiterenden 58 am Außenkreis der Trägerplatte 18 austritt. Bei dieser Ausführungsform ist anders als bei der vorliegend nicht beanspruchten Ausführungsform gemäß FIG 2 nicht mehr der gesamte Außenkreis 58 der Trägerplatte 18 bestrahlt oder bestrahlbar. Um nun zu gewährleisten, dass jederzeit Licht von einer Lichtquelle 22' zu einem Empfänger 30' gelangt, können zum einen solche Empfänger 30' verwendet werden, die einen vorbestimmten Winkelbereich abtasten, der zum Beispiel einem Abstand von zwei Lichtwellenleiterenden 58 entspricht. Die Abstände der Lichtwellenleiterenden 58 einerseits und die Abstände von zwei Empfängern 30' andererseits sind so gewählt, dass stets von irgendeinem Lichtwellenleiterende 58 Licht zu einem Empfänger 30' gelangt.

Bei geschickter Wahl der Lichtwellenleiterverzweigungen kann die Zahl der Lichtquellen 22' im Vergleich zur vorliegend nicht beanspruchten Ausführungsform gemäß FIG 2 reduziert werden, vergleiche insbesondere FIG 6, bei der eine aufwendigere Verzweigung gewählt ist.

Sowohl bei der vorliegend nicht beanspruchten Ausführungsform gemäß FIG 2 als auch bei der erfindungsgemäßen Ausführungsform gemäß FIG 5 bzw. FIG 6 fällt auf, dass ein Teil der Lichtquellen 22 bzw. 22' Licht in eine fernab von den Empfängern 30 bzw. 30' liegenden Richtung abstrahlen. Dieses Licht geht für den Datenaustausch verloren. Es ist nicht leicht, auf einem drehenden Bauteil Energie für Lichtquellen 22 und 22' bereitzustellen. Diese Energie sollte nicht verschwendet werden. Zu diesem Zweck werden die Lichtquellen 22 bzw. 22' bevorzugt so angesteuert, dass lediglich die im Bereich der Empfänger 30' befindlichen Lichtquellen 22' Licht abstrahlen und die anderen Lichtquellen nicht. Dies ist sowohl bei der vorliegend nicht beanspruchten Ausführungsform gemäß FIG 2 als auch gemäß FIG 5 verwirklichbar, aber insbesondere für die erfindungsgemäße Ausführungsform gemäß FIG 5 in FIG 7 dargestellt: In FIG 7 geben die oberen drei Lichtquellen 22' Licht ab, und die übrigen Lichtquellen geben kein Licht ab. Dreht sich die Trägerplatte 18 wegen der Drehung der Hohlwelle 14, werden jeweils andere der Lichtquellen 22' ausgewählt, welche abstrahlen, nämlich insbesondere immer die, welche Licht zu den Empfängern 30' senden.

Den Ausführungsformen der Erfindung ist es gemeinsam, dass ein Weg aufgezeigt wird, wie die Lichtübermittlung von einem ortsfesten zu einem drehenden Maschinenteil bzw. umgekehrt in radialer Richtung erfolgen kann. Dies ermöglicht es, die Maschinenteile so anzuordnen, dass das eine das andere umgibt, so dass in axialer Richtung Raum gewonnen wird, die Maschine also kurz baut.

## Patentansprüche

1. Maschine mit einem ersten Maschinenteil und einem zweiten Maschinenteil, das relativ zu dem ersten Maschinenteil um eine Drehachse drehbar ist, wobei zumindest eine Lichtquelle (22, 22', 36) an dem einen Maschinenteil bereitgestellt ist, um zur Datenübermittlung Lichtsignale für zumindest einen an dem anderen Maschinenteil bereitgestellten Lichtempfänger (30, 30', 42) abzugeben, wobei die zumindest eine Lichtquelle (22, 22', 36) und der zumindest eine Lichtempfänger (30, 30', 42) so angeordnet sind, dass die Lichtsignale in radialer Richtung zur Drehachse übertragen werden,
**dadurch gekennzeichnet, dass** an dem einen Maschinenteil eine Mehrzahl von Lichtquellen (22') bereitgestellt ist, die dazu dienen, Licht in eine sich verzweigende Lichtwellenleiterstruktur (46, 56) einzukoppeln, wobei einzelne Lichtwellenleiterzweige am Rand des einen Maschinenteils enden, und dass an dem anderen Maschinenteil zumindest zwei Empfänger (30, 30') bereitgestellt sind, wobei die Anzahl der Enden der Lichtwellenleiterzweige (58) und deren Winkelabstände passend zur Anzahl und zum Winkelabstand der Empfänger (30, 30') derart gewählt sind, dass bei jeder Winkelstellung Licht aus zumindest einem Lichtwellenleiterzweigende (58) zu einem Empfänger (30') gelangt.

2. Maschine nach Anspruch 1,
**dadurch gekennzeichnet, dass** die Lichtwellenleiterstruktur (46, 56) in eine Leiterplatte (44, 54) integriert ist.

3. Maschine nach Anspruch 1 oder 2,
**dadurch gekennzeichnet, dass** die Lichtquellen (22, 22', 36) von einer Steuereinheit angesteuert werden, welche jeweils nur einen Teil der Lichtquellen gleichzeitig zur Lichtabgabe veranlasst.

4. Maschine nach Anspruch 3,
**dadurch gekennzeichnet, dass** die Steuereinheit den Teil der gleichzeitig zur Lichtabgabe veranlassten Lichtquellen (22, 22', 36) in Abhängigkeit von einer Winkelstellung des zweiten Maschinenteils derart auswählt, dass nur die Lichtquellen zur Lichtabgabe veranlasst werden, deren Licht bei der Winkelstellung zu einem Empfänger (30, 30', 42) gelangt.

5. Maschine nach einem der vorhergehenden Ansprüche,
**dadurch gekennzeichnet, dass** das zweite Maschinenteil über eine Hohlwelle (14) drehbar ist.

6. Maschine nach einem der vorhergehenden Ansprüche,
**dadurch gekennzeichnet, dass** an dem einen Maschinenteil auch ein Lichtempfänger (42) und an dem anderen Maschinenteil auch eine Lichtquelle (36) angeordnet ist, so dass eine bidirektionale Kommunikation zwischen dem einen und dem anderen Maschinenteil ermöglicht ist.

## Claims

1. Machine with a first machine part and a second machine part which is able to be pivoted relative to the first machine part around a pivot axis, wherein at least one light source (22, 22', 36) is provided on the first machine part, in order to emit light signals for data transmission for at least one light receiver provided on the other machine part (30, 30', 42), wherein the at least one light source (22, 22', 36) and the at least one light receiver (30, 30', 42) are arranged so that the light signals will be transmitted in a radial direction in relation to the pivot axis,
**characterised in that** a plurality of light sources (22') are provided on the one machine part which serve to couple light into a branching optical waveguide structure (46, 56), wherein individual optical waveguide branches end at the edge of the one machine part and that on the other machine part at least two receivers (30, 30') are provided, wherein the number of ends of the optical waveguide branches (58) and their angular spacings are selected to match the choice and the angular spacing of the receivers (30, 30') such that, for each angular setting, light from at least one optical waveguide branch (58) reaches a receiver (30').

2. Machine according to claim 1,
**characterised in that** the optical waveguide structure (46, 56) is integrated into a printed circuit board (44, 54).

3. Machine according to claim 1 or 2
**characterised in that** the light sources (22, 22', 36) are controlled by a control unit which in each case causes only some of the light sources to emit light simultaneously.

4. Machine according to claim 3,
**characterised in that** the control unit selects the part of the light sources (22, 22', 36) caused to emit light simultaneously as a function of an angular setting of the second machine part such that only the light sources of which the light reaches a receiver (30, 30', 42) at the angular setting are caused to emit light.

5. Machine according to one of the preceding claims,
**characterised in that** the second machine part is able to be turned via a hollow shaft (14).

6. Machine according to one of the preceding claims,
**characterised in that** a light receiver (42) is also disposed on the one machine part and a light source (36) is also disposed on the other machine part so that a bidirectional communication between the one and the other machine part is made possible.

## Revendications

1. Machine ayant une première partie de machine et une deuxième partie de machine, qui peut tourner autour d'un axe de rotation par rapport à la première partie de machine, dans laquelle au moins une source ( 22, 22', 36 ) lumineuse est mise sur l'une des parties de la machine afin, pour la transmission de données, d'émettre des signaux lumineux pour au moins un récepteur (30, 30', 42) de lumière mis sur l'autre partie de la machine, dans laquelle la au moins une source ( 22, 22', 36 ) lumineuse et le au moins un récepteur (30, 30', 42) de lumière sont disposés de manière à transmettre les signaux lumineux dans une direction radiale par rapport à l'axe de rotation,
**caractérisée en ce que**, sur l'une des parties de la machine, est mise une pluralité de sources ( 22' ) lumineuses, qui servent à injecter de la lumière dans une structure ( 46, 56 ) à fibre optique bifurquant, des bifurcations individuelles de fibre optique se terminant au bord de l'une des parties de la machine et **en ce que**, sur l'autre partie de la machine, sont mis au moins deux récepteurs ( 30, 30' ), le nombre des fins des bifurcations ( 58 ) de fibre optique et leur écart angulaire étant choisis en s'adaptant au nombre et à l'écart angulaire des récepteurs ( 30, 30' ), de manière à ce que, pour chaque position angulaire, de la lumière provenant d'au moins une bifurcation ( 58 ) de branche de fibre optique arrive à un récepteur ( 30' ).

2. Machine suivant la revendication 1,
**caractérisée en ce que** la structure ( 46, 56 ) de fibre optique est intégrée dans une plaquette ( 44, 54 ) à circuits imprimés.

3. Machine suivant la revendication 1 ou 2,
**caractérisée en ce que** les sources ( 22, 22', 36 ) lumineuses sont commandées par une unité de commande, qui fait que respectivement seulement une partie des sources lumineuses émet de la lumière en même temps.

4. Machine suivant la revendication 3,
**caractérisée en ce que** l'unité de commande sélectionne la partie des sources ( 22, 22', 36 ) lumineuses provoquant en même temps l'émission de lumière en fonction d'une position angulaire de la deuxième partie de la machine, de manière à ce que seules les sources lumineuses, dont la lumière arrive pour la position angulaire à un récepteur ( 30, 30', 42 ), émettent de la lumière.

5. Machine suivant l'une des revendications précédentes,
**caractérisée en ce que** la deuxième partie de la machine peut tourner par un arbre ( 14 ) creux.

6. Machine suivant l'une des revendications précédentes,
**caractérisée en ce que**, sur l'une des parties de la machine, est monté aussi un récepteur ( 42 ) de lumière et, sur l'autre partie de la machine, est montée aussi une source ( 36 ) lumineuse, de manière à rendre possible une communication bidirectionnelle entre l'une et l'autre parties de la machine.
